# EUROPEAN PATENT APPLICATION

(11) **EP 0 820 846 A1**
(43) Date of publication of application: **28.01.1998**
(21) Application number: 97112596.8
(22) Date of filing: 23.07.1997
(51) Int. Cl.: B29B 9/06, B29B 13/04

(54) **Pelletizer for plastics**

(30) Priority: 24.07.1996 IT MI961548
(71) Applicant: FERIOLI FILIPPO S.r.l., I-21055 Gorla Minore (Varese) (IT)
(72) Inventor: Rossi, Albino, 21055 - Gorla Minore (Varese) (IT)
(74) Representative: Forattini, Amelia

(57) **Abstract**

A pelletizer includes an extruder head (3) adapted to produce plastic strands (47) and a strand cooling device constituted by slotted cylinders (15, 33) that are suitable to advance and cool the strands. The cylinders include cavities for the circulation of a coolant that does not make contact with the plastic strands.

## Description

The present invention relates to a pelletizer for plastics.

Conventional pelletizers include an extrusion head that is suitable to produce strands of plastic that are cut by a cutter to form pellets.

The strands formed by the extrusion head must be cooled before they can be cut, and this operation is conventionally performed by passing the strands through a tank that contains water.

This cooling method has the considerable drawback of producing polluted water that must be disposed in compliance with statutory provisions, with consequent costs.

Another severe drawback arises from the production of fumes and bad odors that pollute the workplace. Furthermore, again with reference to the workplace, the operator, who has an active role in the operation of the conventional machine, must use his hands, on which he of course wears gloves, to guide the movement of the strands from the extrusion head to the tank, with the risk of burns and accidents. In this regard, it is noted that in conventional machines the strands that move from the extrusion head to the cutter occupy a space of approximately 10-12 meters without any protection for the operators against heat and against the moving parts.

Conventional pelletizers also have drawbacks from the point of view of production quality; plastics are in fact generally hygroscopic, and during cooling they absorb water, which must be eliminated with a subsequent operation; however, even the best driers are unable to eliminate this water entirely and a residual humidity of at least 14% remains.

Another problem concerns the waste that is produced; it is in fact necessary to guide the strands to the pulling device over approximately 12 meters, with consequent easy and frequent breakage of the strands due to the presence of gas bubbles or of pulses during extrusion. It should also be noted that this waste is constituted by long hardened strands that must somehow be broken or in any case deposited in containers; all this leads to a great expenditure of work and space in addition to considerable confusion.

Moreover, every breakage produces additional waste when extrusion starts again.

Finally, conventional machines require the constant attention of trained personnel.

GB-A-1.005.901, discloses a process for making a foamable polymeric composition in pellet form, showing all the above cited problems.

JP-A-07117047 discloses a method of making thermo-plastic resin pellets using a cooling roll disposed below the extrusion head for cooling the strand to produce pellets free from bubbles.

An aim of the present invention is to provide a pelletizer that can solve the above described problems of the prior art, with particular regard to the problems of pollution.

An object of the invention is to provide a machine that does not produce polluted water.

A further object is to provide a machine that does not produce fumes and unpleasant odors in the workplace.

A further object is to provide a machine that is safer and more comfortable for the operators.

A further object is to provide a machine that is capable of producing a product of higher quality.

A further object is to provide a machine in which the production waste is extremely limited with respect to conventional machines.

A further object is to drastically reduce the space occupied by the machine and by the devices required for the production of the pellets.

This aim, these objects, and others that will become apparent hereinafter are achieved by a pelletizer as claimed in the appended claims.

Further characteristics and advantages will become apparent from the description of a preferred but not exclusive embodiment of the invention, illustrated only by way of non-limitative example in the accompanying drawings, wherein:

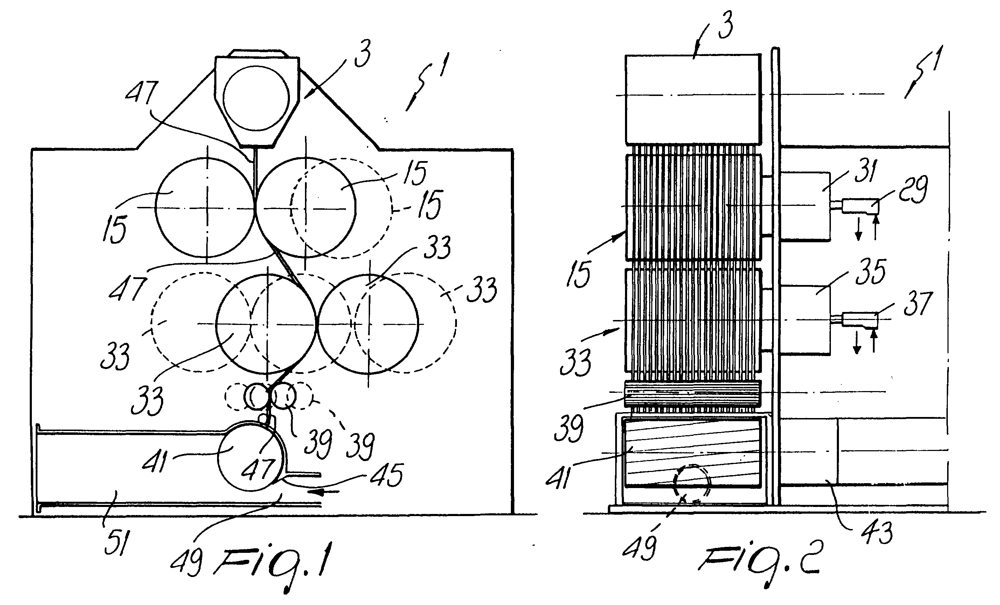

Fig. 1 is a schematic cutout front elevation view of the machine according to the invention;
Fig. 2 is a schematic cutout side view of the machine according to the invention;

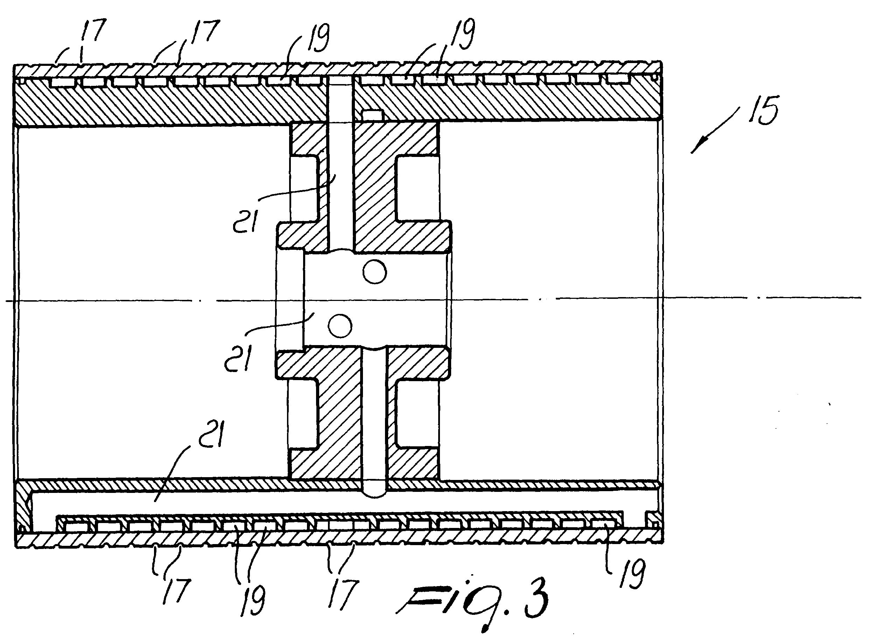

Fig. 3 is a longitudinal sectional view of a cooling roller;

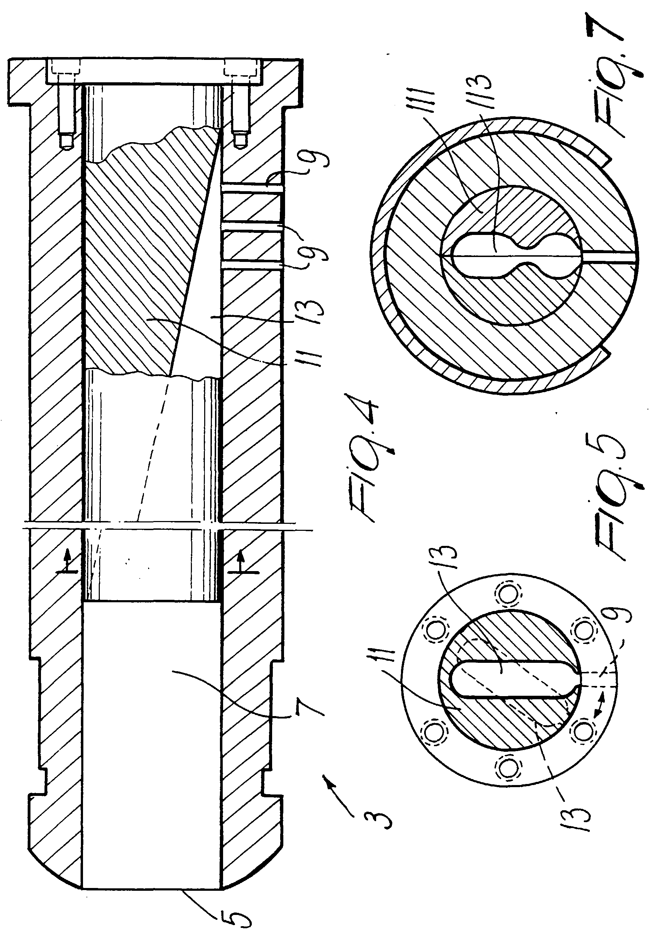

Fig. 4 is a longitudinal sectional view of the extrusion head according to the invention;
Fig. 5 is a partial sectional front view of the extrusion head of Fig. 4;
Fig. 6 is a longitudinal sectional view of a cylinder and of the system for mounting it on the machine frame so that it cantilevers out;
Fig. 7 is a partial sectional front view of the extrusion head of Fig. 4, according to another embodiment of the linear distribution unit;
Fig. 8 is a schematic view of the pneumatic actuation device of the linear distribution unit;
Fig. 9 is a sectional lateral elevation view of the means for connecting the extrusion head to the extruder;
Fig. 10 is a plan view of the connecting means of Fig. 9.

With reference to the figures, the pelletizer according to the invention, generally designated by the reference numeral 1, includes a spinnerette, or extrusion head 3, connected to an extruder 57 by an opening 5 that connects the extruder to a tubular chamber 7 of the spinnerette.

Advantageously, the spinnerette is connected to the extruder by a connecting means, generally designated by the reference numeral 55, that is constituted by an S-shaped part associated with the extruder and with the spinnerette by respective spherical joints 59 and 61, as clearly shown in Figure 9.

The shape of the connecting means allows to adapt the spinnerette to any extruder, regardless of the height and transverse position.

The tubular chamber 7 of the spinnerette includes a plurality of vertical holes 9 that are formed on the bottom of the chamber and are open downward.

The tubular cavity 7 is engaged by a linear distribution unit 11 that has a substantially cylindrical cross-section and is provided with a linear opening 13 adapted to connect the extruder to the holes 9.

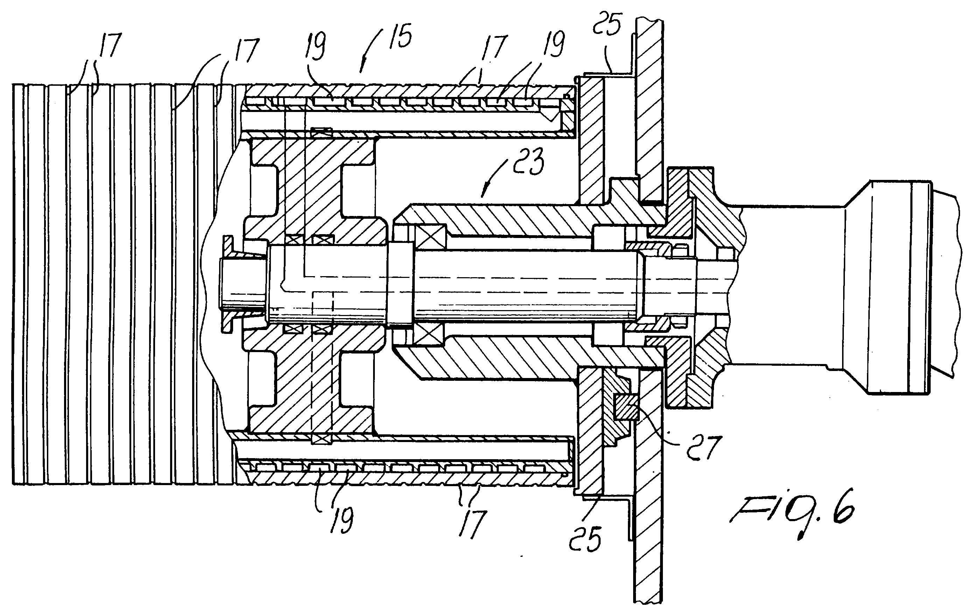

The linear opening 13 can be conical and have a substantially oval transverse cross-section, as shown in Figure 5, or can more preferably have a two-lobed cross-section, as shown in Figure 7, where the linear distribution unit is designated by the reference numeral 111 and the linear opening is designated by the reference numeral 113.

The linear distribution unit 11 can be rotated, as shown schematically in dashed lines in Figure 5, so as to interrupt the connection between the linear opening 13 and the holes 9 in order to interrupt the feeding of plastic to the holes. This rotation can be advantageously produced by a pneumatic actuator, generally designated by the reference numeral 53 in Figure 8, or by any other suitable system.

Downstream of the spinnerette, and in this case below it, there is a first pair of cylinders 15 that have a cooling means and circumferential slots or grooves 17 that has a substantially hemispherical cross-section.

The cooling means includes a closed circuit for the circulation of a coolant, for example water. The closed circuit includes a plurality of cavities 19 at the internal surface of the cylinder that are fed through passages 21 formed inside the cylinder 15.

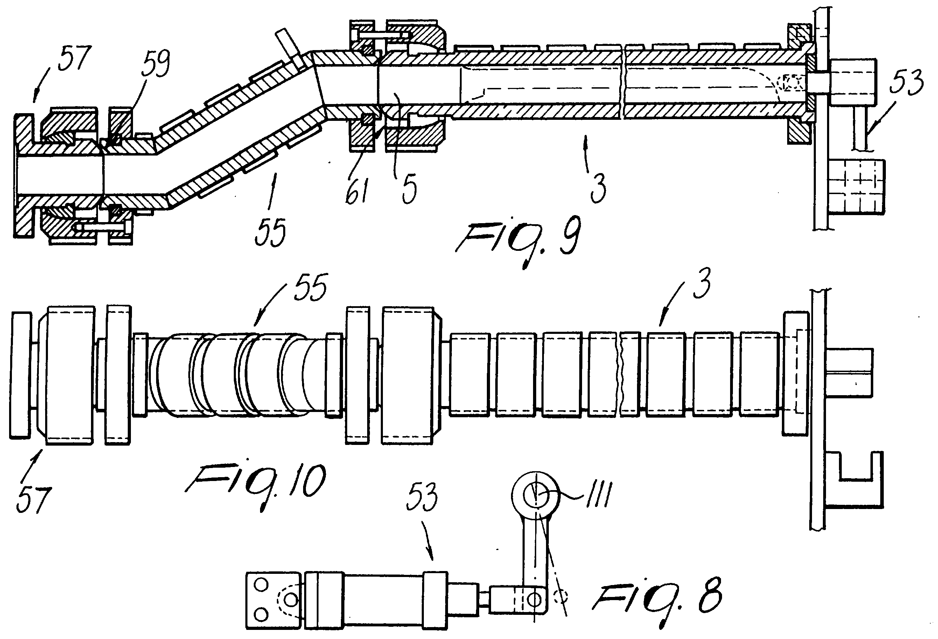

The cylinder 15 is mounted in a cantilevered manner on the frame of the machine by a cantilevered shaft 23 that can slide transversely on guides 25 and 27, as shown in Figure 6, and is actuated by pneumatic systems (not shown). The cantilevered shaft 23 includes internal passages for the circulation of the coolant that are connected to the passages 21 of the cylinder 15 and to a feeder 29 that is associated with the cylinder 15. Each cylinder 15 is actuated by an electric motor 31.

Downstream of the first pair of cylinders 15, and in this case below it, there is a second pair of cylinders 33. Each cylinder 33 is motorized by a motor 35 and includes a coolant feeder 37, in a manner that is fully identical to the cylinders 15. The cylinders 33 includes a cooling means and slots in a manner that is fully similar to the cylinders 15 and are not described in detail herein for the sake of brevity.

A third pair of presser cylinders 39 is arranged downstream of the second pair of cylinders and in this specific case below it.

Each presser cylinder is motorized by an electric motor (not shown) and can move transversely like the cylinders 15 and 33. In the illustrated case, the presser cylinders are not provided with a cooling means, but they can be, according to the requirements, with a system that is similar to the one of the cylinders 15 and 33. The cylinders 39 have circumferential slots that are similar to the slots 17 of the cylinders 15 and 33.

Downstream of the third pair of presser cylinders, and below it in this specific case, there is a circular cutter 41 that is driven by a motor 43 and is suitable to work with a fixed complementary blade 45 to cut the strands 47 fed by the presser cylinders 39. A tunnel 49 with forced ventilation removes the pellets produced by the cutting of the strands and conveys them into a chamber 51 to bag them.

Advantageously, the assembly constituted by the spinnerette, the cylinders, and the cutter can be contained in a closed box body (not shown) to facilitate the disposal of any fumes produced by the process, which accordingly do not contaminate the workplace.

The operation of the machine according to the invention is as follows.

The fluid plastic material produced by the extruder is conveyed into the linear opening 13 of the distribution unit 11 in the spinnerette and exits from the vertical openings 9 in the form of strands 47.

Strands 47 are gripped by the first pair of cylinders 15, which can move transversely for this purpose, and enter the slots 17. The strands 47 thus undergo a first cooling produced by the circulation of coolant inside the cylinders 15.

Strands 47 then pass between the second pair of cylinders 33, undergo further cooling, and are then guided by the presser cylinders 39 to the cutter 41 for cutting. The presser cylinders 39 can be advantageously provided with a cooling means to further reduce the temperature of the strands and thus facilitate their cutting.
By virtue of the forced ventilation system 49, the pellets are conveyed into the chamber 51 and then bagged, in a per se known manner.

The cantilevered mounting of the cylinders facilitates their transverse movement, which is required not only to grip the strands during startup but also to adjust the relative position of the cylinders according to the requirements and according to the type of plastic that is used.

In practice it has been observed that the invention achieves the intended aim and objects.

The advantages of the machine according to the invention are numerous and evident.

No polluted water is produced, and since the cooling circuit is closed, a minimal amount of coolant is used.

Any fumes and unpleasant odors produced during the process are not released into the workspace because they are contained by the box body and are easily disposed with suitable aspirator devices that are per se known.

Since no moving part is exposed, as instead occurred in conventional machines, personnel safety is improved considerably.

Furthermore, the space occupied by the machine is reduced drastically with respect to conventional machines, to the full benefit of economy in production.

In addition to the already considerable advantages from the environmental point of view and from the point of view of production savings, one obtains a product that is technically more valid, mainly in view of the fact that it does not make contact with water, as instead occurs in conventional machines.

The machine according to the invention is susceptible of numerous modifications and variations, all of which are within the scope of the inventive concept; all the details may furthermore be replaced with technically equivalent elements.

The materials employed, as well as the dimensions, may of course be any according to the requirements and the state of the art.

## Claims

1. Pelletizer comprising an extruder head (3) adapted to produce plastic strands (47), characterized in that it comprises a strand cooling device (1) comprising a roller means (15, 33) adapted to advance and cool said strands (47) and having a cooling means (19).

2. Machine according to claim 1, characterized in that said roller means comprises at least one first pair of slotted cylinders (15) that face each other so that said strands (47) are guided in the slots (17) of said cylinders, said cylinders rotating in opposite directions.

3. Machine according to one or more of the preceding claims, characterized in that said roller means comprises at least one second pair of facing slotted cylinders (33) that is arranged downstream of said first pair (15) and is suitable to perform a further cooling of said strands (47).

4. Machine according to one or more of the preceding claims, characterized in that it comprises at least one third pair of presser cylinders (39) that are suitable to guide said strands (47), said presser cylinders being arranged downstream of said second pair (33) of slotted cylinders.

5. Machine according to one or more of the preceding claims, characterized in that said presser cylinders comprise a cooling means.

6. Machine according to one or more of the preceding claims, characterized in that said cylinders (15, 33, 39) are arranged in pairs in a vertical cascade below said extruder head (3).

7. Machine according to one or more of the preceding claims, characterized in that said slotted cylinders comprise circumferential slots (17) having a semicircular cross-section.

8. Machine according to one or more of the preceding claims, characterized in that it comprises a means (41) for cutting said strands, said means being arranged downstream of said third pair (39) of cylinders.

9. Machine according to one or more of the preceding claims, characterized in that said cutting means is constituted by a cylindrical cutter (41) adapted to work with a static complementary blade (45), said third pair of presser cylinders (39) being suitable to guide said strands (47) in said cutter (41).

10. Machine according to one or more of the preceding claims, characterized in that it comprises a ventilation means (49) that is suitable to remove the pellets produced by the cutting of said strands by means of said cutter (41).

11. Machine according to claim 1 or 2, characterized in that said cylinders comprise cavities (19) for the circulation of a coolant.

12. Machine according to one or more of the preceding claims, characterized in that said cylinders (15, 33, 39) can move radially in order to allow to mutually space the cylinders of a pair and move one pair of facing cylinders with respect to the adjacent pair.

13. Machine according to one or more of the preceding claims, characterized in that said cylinders (15, 33, 39) can move by means of pneumatic actuators.

14. Machine according to one or more of the preceding claims, characterized in that said cylinders (15, 33, 39) are mounted on the frame of said machine in a cantilever manner.

15. Machine according to one or more of the preceding claims, characterized in that said cylinders are actuated by electric motors (31, 35) adapted to vary the rotation rate, and in that said motors can be synchronized to maintain a constant rim speed of said cylinders by means of an electronic shaft system.

16. Machine according to one or more of the preceding claims, characterized in that said extrusion head (3) produces a plurality of strands (47) that are extruded downward in a vertical direction.

17. Machine according to claim 1, characterized in that it comprises a connecting means (55) that is suitable to connect said extrusion head (3) to an extruder member, said connection means being suitable to connect said extrusion head (3) even when said extrusion head is not aligned with said extruder member.

18. Machine according to claim 17, characterized in that said connecting means (55) is constituted by a substantially S-shaped tubular part that is associated with said extruder member (57) and with said head (3) by respective spherical joints (59, 61).

19. Machine according to claim 1, characterized in that it comprises an extrusion head (3) comprising a tubular chamber (7) connected to an extruder (57) and having a plurality of radial holes (9) arranged longitudinally in said chamber; said chamber being engaged by a linear distribution unit (11) that has a linear opening (13) and can rotate inside the chamber in at least two positions: an open position, in which said linear opening (13) connects said extruder to said holes (9), and a closed position, in which said linear distribution unit (11) closes said holes (9) and said linear opening (13) is not connected to said holes.

20. Extrusion head for the extruder of a pelletizer, characterized in that it comprises a tubular chamber (7) that is connected to said extruder (57) and comprises a plurality of radial holes (9) that are arranged longitudinally in said chamber; said chamber being engaged by a linear distribution unit (11) that is provided with a linear opening (13) and can rotate inside the chamber into at least two positions: an open position, in which said linear opening (13) connects said extruder to said holes (9), and a closed position, in which said linear distribution unit (11) closes said holes (9) and said linear opening (13) is not connected to said holes (9).

21. Extrusion head according to claim 20, characterized in that said holes (9) are formed in the lower part of said chamber (7) and are vertical.

22. Extrusion head according to claim 20, characterized in that said linear opening (13) is conical.

23. Extrusion head according to claim 20, characterized in that said linear opening (13) has a two-lobed transverse cross-section.
